(19) Europäisches Patentamt / European Patent Office / Office européen des brevets

(11) EP 4 492 064 A1

(12) **EUROPEAN PATENT APPLICATION**
published in accordance with Art. 153(4) EPC

(43) Date of publication:
**15.01.2025  Bulletin 2025/03**

(21) Application number: 23766389.3

(22) Date of filing: 08.02.2023

(51) International Patent Classification (IPC):
*G01N 35/00* (2006.01)    *G01N 35/10* (2006.01)

(52) Cooperative Patent Classification (CPC):
**G01N 35/00; G01N 35/10**

(86) International application number:
**PCT/JP2023/004090**

(87) International publication number:
**WO 2023/171209 (14.09.2023 Gazette 2023/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  10.03.2022  JP 2022036941

(71) Applicant: **HITACHI HIGH-TECH CORPORATION**
**Tokyo 105-6409 (JP)**

(72) Inventors:
- **SHINODA Tomokazu**
  **Tokyo 105-6409 (JP)**
- **TAKAHASHI Kenichi**
  **Tokyo 105-6409 (JP)**

(74) Representative: **Strehl Schübel-Hopf & Partner**
**Maximilianstrasse 54**
**80538 München (DE)**

(54) **DISPENSING DEVICE AND AUTOMATIC ANALYSIS DEVICE**

(57)    Provided is a dispensing device which prevents the occurrence of dispensing abnormality. This dispensing device comprises: a dispensing mechanism 101 which is provided with a probe 101p for dispensing liquid; a detection unit 102 which is provided with a liquid level sensor for measuring capacitance between a distal end of the probe and a reference electric potential surface, thereby outputting a capacitance signal; and a signal processing unit 103 which determines the state of the probe on the basis of a change in a temporal waveform of the capacitance signal.

[FIG. 1A]

EP 4 492 064 A1

## Description

## Technical Field

The present invention relates to a dispensing device and an automatic analysis device including the dispensing device.

## Background Art

In an automatic analysis device, for example, to perform component analysis for biological samples, an automatic biochemical analysis device reacts a test sample with a reagent and optically measures changes in color or turbidity occurring due to the reaction by a photometric unit such as a spectrophotometer. The most commonly used means for detecting the liquid level of a test sample is a capacitance change method of detecting changes in capacitance when a probe touches the liquid level. However, when such a liquid level sensor is used, it may not be possible to accurately detect a liquid level when a distal end of the probe is dirty or when the probe is damaged or the like. Then, accurate sampling cannot be performed due to sample carry-back or air suction, and a dispensing abnormality occurs.

PTL 1 discloses forming a fluorine-containing diamond carbon layer on a probe surface to prevent carry-over. When a surface treatment layer of a probe is cracked or scratched due to some kind of impact or contact, a metal nozzle comes into direct contact with air, causing a significant change in capacitance, and thus a probe abnormality can be detected. Since a probe with a cracked or scratched surface treatment layer is likely to cause carry-over, a sample analyzed when an abnormality is detected is stored, making it possible to reacquire analysis data after a probe is replaced.

## Citation List

## Patent Literature

PTL 1: JP2013-44623A

## Summary of Invention

## Technical Problem

In PTL 1, the detected probe abnormality is an abnormality in the surface treatment layer of the probe. However, dispensing abnormalities are also caused by adhesion of dirt, finer scratches, or deterioration. In PTL 1, abnormalities in the probe that have occurred are detected, but it is desirable to detect deterioration or abnormalities in the probe at an early stage so that maintenance can be performed and to prevent data abnormalities that require reexamination in advance.

An object of the invention is to provide a dispensing device that can detect changes in a probe such as deterioration before an abnormality occurs in the probe, and an automatic analysis device using the dispensing device.

## Solution to Problem

A dispensing device according to one embodiment of the present invention includes a dispensing mechanism that includes a probe for dispensing a liquid, a detection unit that includes a liquid level sensor measuring a capacitance between a distal end of the probe and a reference potential surface and outputting a capacitance signal, and a signal processing unit that determines a state of the probe based on a change in a temporal waveform of the capacitance signal.

## Advantageous Effects of Invention

A dispensing device or an automatic analysis device that prevents the occurrence of a dispensing abnormality is provided.

## Brief Description of Drawings

[Fig. 1A] Fig. 1A is a block diagram showing a schematic configuration of a dispensing device.
[Fig. 1B] Fig. 1B is a diagram showing a capacitance signal detected by a liquid level sensor.
[Fig. 2A] Fig. 2A shows temporal waveforms of a capacitance signal Cs and a probe operation determination signal S.
[Fig. 2B] Fig. 2B shows temporal waveforms of the capacitance signal Cs and the probe operation determination signal S.
[Fig. 2C] Fig. 2C shows temporal waveforms of the capacitance signal Cs and the probe operation determination signal S.
[Fig. 2D] Fig. 2D shows temporal waveforms of the capacitance signal Cs and the probe operation determination signal S.
[Fig. 3] Fig. 3 is a flowchart for acquiring a reference capacitance signal SCs.
[Fig. 4] Fig. 4 shows an example of an alarm display setting screen.
[Fig. 5] Fig. 5 is a flowchart for determining a state of a probe in use.
[Fig. 6] Fig. 6 is a flowchart for determining the state of a probe in use.
[Fig. 7] Fig. 7 shows an example of a display screen for an intraday time-series management chart.
[Fig. 8] Fig. 8 shows an example of a display screen for an interday time-series management chart.
[Fig. 9] Fig. 9 shows an example of a probe state evaluation screen.
[Fig. 10] Fig. 10 is a schematic configuration diagram of an automatic analysis device.

Description of Embodiments

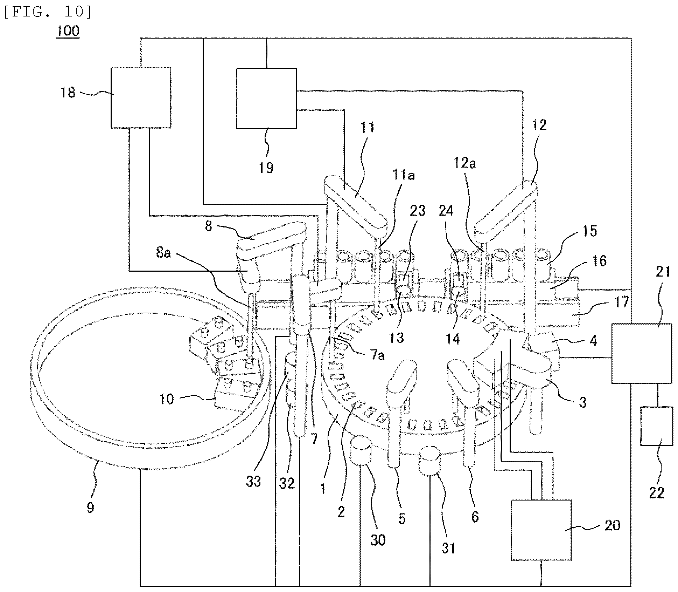

Fig. 10 is a schematic diagram of an automatic analysis device 100 that performs biochemical analysis. A biological sample to be analyzed (hereinafter simply referred to as a sample), such as blood or urine, is contained in a sample container 15. One or more sample containers 15 are mounted on a sample rack 16 and transported by a sample transport mechanism 17. A reagent used in the analysis of the sample is contained in a reagent bottle 10, and a plurality of reagent bottles 10 are disposed side by side in a circumferential direction on a reagent disk 9. The sample and the reagent are mixed and reacted in a reaction container 2. A plurality of reaction containers 2 are disposed side by side in a circumferential direction on a reaction disk 1. The sample is dispensed into the reaction container 2 from the sample container 15, which is transported to a sample dispensing position by the sample transport mechanism 17, by a first sample dispensing mechanism 11 or a second sample dispensing mechanism 12. On the other hand, the reagent is dispensed into the reaction container 2 from the reagent bottle 10 by reagent dispensing mechanisms 7 and 8. A mixture of the sample and the reagent (reaction liquid) dispensed into the reaction container 2 is stirred by stirring mechanisms 5 and 6, and the absorbance of the reaction liquid is measured by a spectrophotometer 4 by measuring transmitted light obtained from a light source (not shown) through the reaction liquid in the reaction container 2. As analysis processing in the automatic analysis device 100, the concentration of a predetermined component of an analysis item corresponding to a reagent and the like are calculated from the absorbance of the mixture (reaction liquid) which is measured by the spectrophotometer 4. The reaction container 2 after the measurement is cleaned by a cleaning mechanism 3.

The first (second) sample dispensing mechanism 11 (12) includes a sample probe 11a (12a) disposed with a distal end thereof facing downward, and a sample pump 19 is connected to the sample probe 11a (12a). The first (second) sample dispensing mechanism 11 (12) is configured to be able to rotate in the horizontal direction and move up and down, and dispenses a sample from the sample container 15 to the reaction container 2 by inserting the sample probe 11a (12a) into the sample container 15 to suction the sample and inserting the sample probe 11a (12a) into the reaction container 2 to discharge the sample. An ultrasonic cleaner 23 (24) for cleaning the sample probe 11a (12a) with a cleaning solution is disposed within an operating range of the first (second) sample dispensing mechanism 11 (12). When a cleaning solution other than water is used, a cleaning tank 13 (14) for cleaning the sample probe 11a (12a) is disposed to remove the cleaning solution used for cleaning with water.

The reagent dispensing mechanisms 7 and 8 include reagent probes 7a and 8a disposed with distal ends thereof facing downward, and a reagent pump 18 is connected to the reagent probes 7a and 8a. The reagent dispensing mechanisms 7 and 8 are configured to be able to rotate in the horizontal direction and move up and down, and dispense the reagent from the reagent bottle 10 into the reaction container 2 by inserting the reagent probes 7a and 8a into the reagent bottle 10 to suction the reagent and inserting the reagent probes 7a and 8a into the reaction container 2 to discharge the reagent. Cleaning tanks 32 and 33 for cleaning the reagent probes 7a and 8a with a cleaning solution are disposed within an operating range of the reagent dispensing mechanisms 7 and 8.

The stirring mechanisms 5 and 6 are configured to be able to rotate in the horizontal direction and move up and down, and are inserted into the reaction container 2 to stir a mixture of a sample and a reagent (reaction liquid). Cleaning tanks 30 and 31 for cleaning the stirring mechanisms 5 and 6 with a cleaning solution are disposed within an operating range of the stirring mechanisms 5 and 6. A cleaning pump 20 is connected to the cleaning mechanism 3.

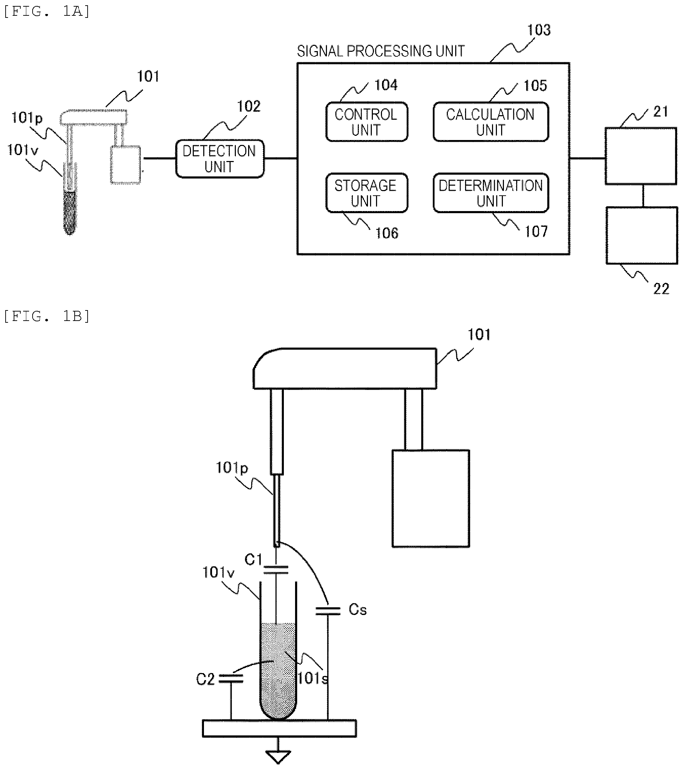

The overall operation of the automatic analysis device 100 is controlled by a control device 21. An input/output device 22 is connected to the control device 21. The input/output device 22 includes an input unit such as a keyboard or buttons for inputting a user's instructions, and a display unit for displaying a GUI for inputting the operating state of the automatic analysis device and instructions to the user. In Fig. 1, for the sake of simplicity, connections between each mechanism configuring the automatic analysis device 100 and the control device 21 are partially omitted.

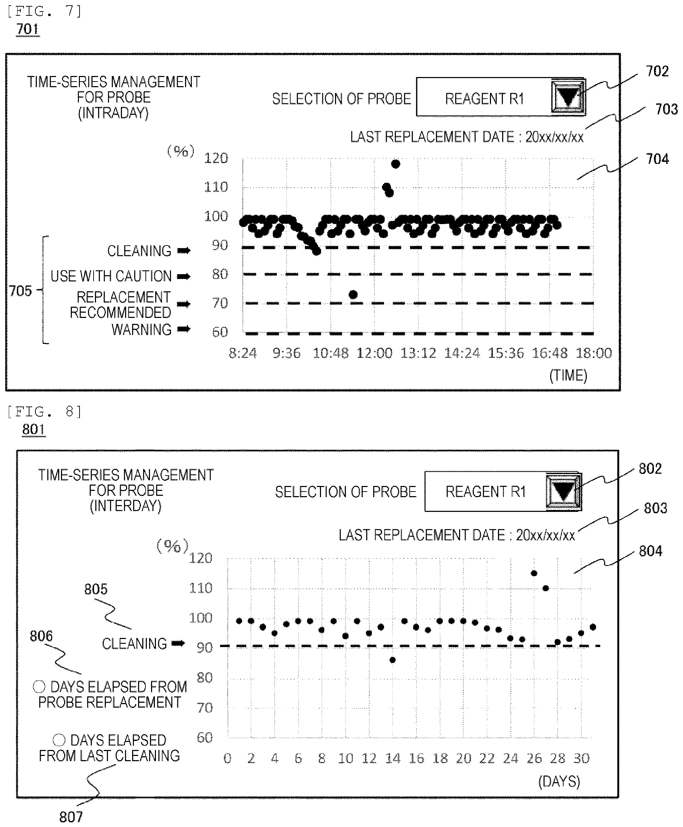

Fig. 1A is a block diagram showing a schematic configuration of the dispensing device of the present embodiment. A dispensing mechanism 101 is equivalent to the sample dispensing mechanisms 11 and 12 and the reagent dispensing mechanisms 7 and 8 shown in Fig. **8.** The dispensing device includes the dispensing mechanism 101, a detection unit 102, and a signal processing unit 103. The detection unit 102 includes a sensor for monitoring the state of a probe 101p, a liquid level sensor for detecting the liquid level of a liquid 101s contained in a container 101v, a pressure sensor for detecting the pressure inside the probe 101p, and the like. Here, the liquid level sensor is assumed to perform capacitive liquid level detection. Here, the liquid level sensor measures a capacitance Cs between the distal end of the probe 101p and the ground (reference potential surface) as shown in Fig. 1B. The capacitance Cs is a composite capacitance of a capacitance C1 between the distal end of the probe 101p and the liquid 101s and a capacitance C2 between the liquid 101s and the ground. After the distal end of the probe 101p comes into contact with the liquid 101s, the capacitance Cs = C2, and from the change, a contact between the probe 101p and the liquid surface of the liquid 101s can be detected. The pressure sensor detects a pressure P in the probe 101p. The pressure in the probe changes depending on a suction operation or a discharge operation performed by the probe 101p. Thus, information on whether a probe operation is being performed normally can be obtained based on sensing information obtained from the detection unit 102.

The signal processing unit 103 is mounted as a signal processing module equipped with, for example, a microprocessor or a memory. A control unit 104 of the signal processing unit 103 controls a probe operation based on a capacitance signal Cs, which is an output of the liquid level sensor from the detection unit 102, and a pressure signal P, which is an output of the pressure sensor, monitors the probe operation, and outputs a probe operation determination signal S, which indicates a probe operation state, to the control device 21 of the device.

In the present embodiment, although details of a detection method will be described later, the signal processing unit 103 detects the state of the probe based on the detected signal Cs from the liquid level sensor. Therefore, the signal processing unit 103 includes a calculation unit 105, a storage unit 106, and a determination unit 107. The calculation unit 105 calculates a waveform change index based on, for example, the area of the capacitance signal Cs, the storage unit 106 stores the area of the capacitance signal Cs or a calculation result of the calculation unit 105, and the determination unit 107 determines the state of the probe based on the waveform change index. Details will be described later.

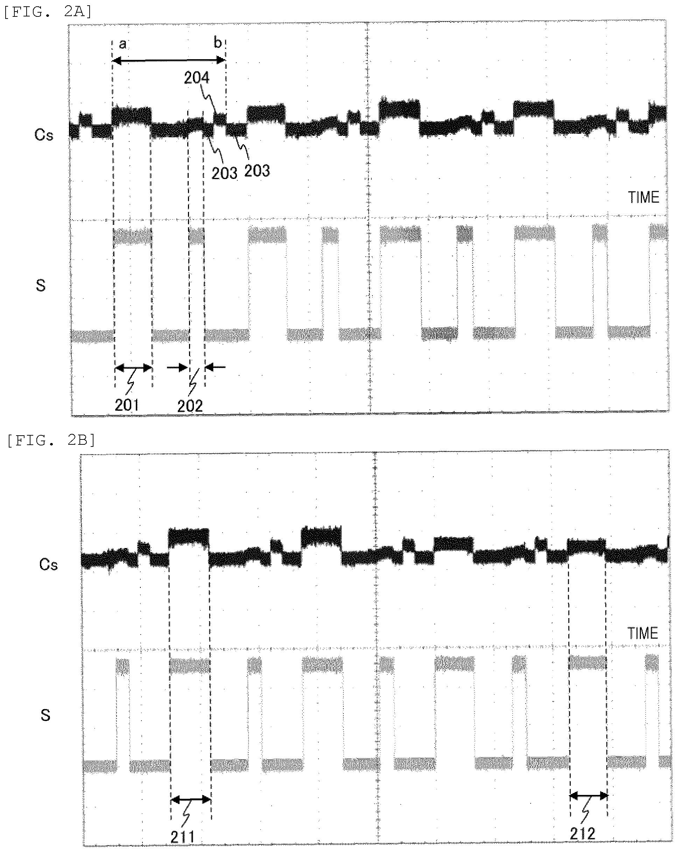

An upper part in Fig. 2A shows a temporal waveform of the capacitance signal Cs, which is an output of the liquid level sensor, and a lower part shows a temporal waveform of the probe operation determination signal S output by the control unit 104 of the signal processing unit 103. The probe in Fig. 2A is, for example, a signal waveform when a normal probe immediately after replacement is operated. The probe operation determination signal S is substantially binarized, and a high-level signal is output in a suction section 201 where the probe performs a suction operation and a discharge section 202 where the probe performs a discharge operation, and a low-level signal is output in the other sections. As such, in the related art, the probe operation determination signal S input from the signal processing unit 103 to the control device 21 of the device is substantially binarized, but it can be seen that the capacitance signal Cs includes more information when comparing the probe operation determination signal S and the capacitance signal Cs. For example, in a movement section 203 where the probe is moved by the dispensing mechanism and a cleaning section 204 where the probe is cleaned, the probe operation determination signal S is a low-level signal and does not change, but different values are output for the capacitance signal Cs. The value of the probe operation determination signal S is equal (high level) in the suction section 201 and the discharge section 202, but the capacitance signal Cs output in the suction section 201 and the capacitance signal Cs output in the discharge section 202 have different values.

The inventors have found that the state of the probe can be determined using information on the capacitance signal Cs, which is discarded in the process of generating the probe operation determination signal S. For example, in the probe immediately after the probe is replaced and the probe after continuous use, a signal waveform of the capacitance signal Cs, which indicates the capacitance between the probe and the ground, changes due to dirt, scratches, aged deterioration, or the like in the probe after continuous use as compared to the probe immediately after the probe is replaced. As shown in Fig. 2A, the capacitance signal Cs continuously detects small changes in voltage, making it possible to grasp the state of the probe during actual operation in real time.

Fig. 2B shows a temporal waveform of the capacitance signal Cs (upper part) and a temporal waveform of the probe operation determination signal S (lower part) when dirt adheres to the probe midway. In a suction section 211, a suction operation is performed while dirt does not adhere to the probe, and in a suction section 212, a suction operation is performed while dirt adheres to the probe. Here, it can be seen that the probe operation determination signal S does not change due to the adhesion of dirt, while the amplitude of the capacitance signal Cs in the suction section 212 is lower than that of the capacitance signal Cs in the suction section 211.

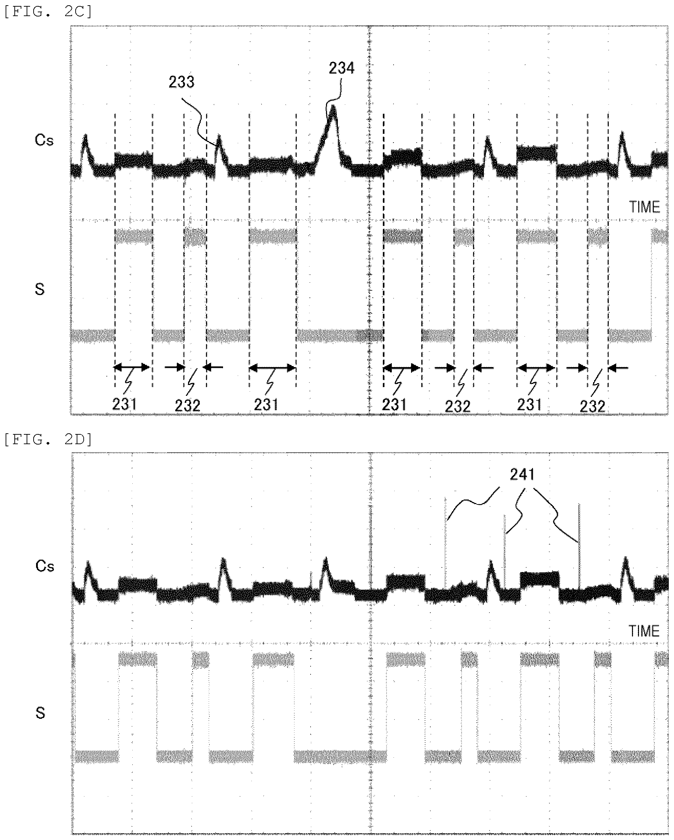

Fig. 2C shows a temporal waveform of the capacitance signal Cs (upper part) and a temporal waveform of the probe operation determination signal S (lower part) when the probe is scratched. Here, it can be seen that a triangular noise waveform 233 caused by scratches appears repeatedly in the capacitance signal Cs. The influence of such a noise waveform does not necessarily appear in the probe operation determination signal S. For example, a noise waveform 234 is superimposed on the waveform of the capacitance signal Cs that originally indicates a discharge operation of the probe, and thus a high-level signal indicating the discharge section 232 is not output in the probe operation determination signal S. An operation timing at which the dispensing mechanism performs a dispensing operation is determined by an operation sequence of the automatic analysis device. Therefore, the control device 21 of the automatic analysis device determines that the discharge operation is not performed appropriately from the probe operation determination signal S, and issues a warning of a dispensing error. However, in the other sections in Fig. 2C, high-level signals indicating a suction section 231 and a discharge section 232 are output from the probe operation determination signal S, and thus the control device 21 does not issue a warning of a dispensing error.

As such, there is a possibility that an abnormality in the probe or a sign of the abnormality, which does not necessarily appear in the probe operation determination signal S, will be able to be detected at an early stage from the temporal waveform of the capacitance signal Cs.

The detection is not limited to the noise waveform, and it can also be seen that the amplitude of the capacitance signal Cs in the suction section 231 is reduced as compared to the temporal waveform of the capacitance signal Cs in Fig. 2A.

Fig. 2D also shows an example of a temporal waveform of the capacitance signal Cs (upper part) and a temporal waveform of the probe operation determination signal S (lower part) when the probe is scratched. In the example, it can be seen that a spike 241 appears in the temporal waveform of the capacitance signal Cs. The timing of occurrence of the spike 241 is a timing when the probe is being moved by the dispensing mechanism, and thus it is considered that environmental factors such as static electricity are affecting a scratched surface. Although the spike 241 does not appear in the probe operation determination signal S, the spike 241 is an indicator indicating that the probe is scratched.

As such, the temporal waveform of the capacitance signal Cs varies depending on the state of the probe, and thus it is possible to recognize the state of the probe during the actual operation in real time by recognizing the variation.

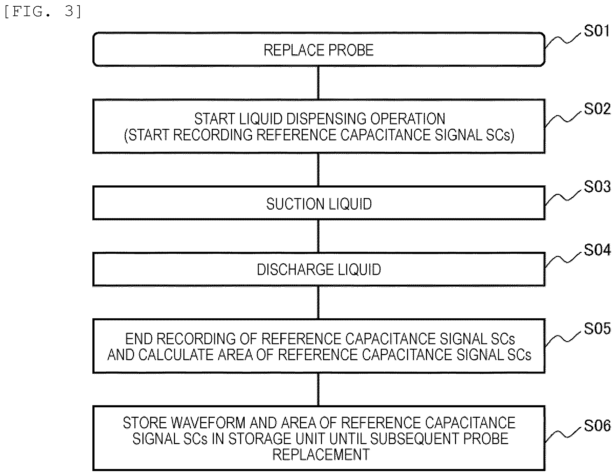

Fig. 3 is a flowchart for acquiring a reference capacitance signal SCs. The reference capacitance signal SCs is a capacitance signal Cs immediately after the probe is replaced. After the probe is replaced (S01), the automatic analysis device starts a dispensing operation, and the control unit 104 of the signal processing unit 103 starts recording a capacitance signal Cs output from the liquid level sensor of the detection unit 102.

The control unit 104 of the signal processing unit 103 records a temporal waveform of the capacitance signal Cs in a fixed section from the suction of a liquid by the probe (S03) to the cleaning of the probe after the discharge of the liquid (S04), and the calculation unit 105 calculates the area of the temporal waveform of the capacitance signal Cs (S05). The control unit 104 stores the recorded temporal waveform of the capacitance signal Cs and the area thereof as a temporal waveform of the reference capacitance signal SCs and the area thereof (reference area) in the storage unit 106 (S06). The temporal waveform and the reference area of the reference capacitance signal SCs are updated in the same procedure when replacing the probe next time.

In the present embodiment, the state of the probe is determined based on changes in the waveforms of the capacitance signal Cs immediately after the probe is replaced (reference capacitance signal SCs) and the capacitance signal Cs of the probe in use in a fixed section from dispensing to cleaning of a liquid.

As shown in Fig. 2A, the fixed section (a ≤ t ≤ b, t: time) is from a: the start of suction of a liquid to b: the end of cleaning of the probe. Here, when the magnitude of the capacitance signal Cs is f(t) (f(t) ≥ 0, a ≤ t ≤ b), a waveform area WA of the capacitance signal Cs can be obtained by (Math. 1).

[Math. 1]

$$WA = \int_a^b f(t)dt$$

Here, an area ratio AR (%) of a waveform area WA2 of the capacitance signal Cs of the probe in use to a waveform area WA1 of the reference capacitance signal SCs (reference area) shown in (Math. 2) can be used as an index of a change in the waveform. The area ratio AR (%) is calculated by the calculation unit 105 of the signal processing unit 103.

[Math. 2]

$$AR(\%) = \frac{WA2}{WA1} \times 100$$

The determination unit 107 of the signal processing unit 103 determines the state of the probe based on the area ratio AR (%).

An example in which the state of the probe is determined by the above-described index of the change in the waveform will be described below, but a method of calculating the index of the change in the waveform of the capacitance signal Cs is not limited to the above. For example, the range of the fixed section in which the waveform of the capacitance signal Cs is stored is not limited to the above-described example. The capacitance signal Cs is continuously input to the signal processing unit 103 in real time. Therefore, any section other than the above-described fixed section may be set to determine the state. The index of the change in the waveform is not limited to the area ratio, and it is also possible to use, for example, a difference between the waveform area WA2 and the waveform area WA1 (reference area). The change in the waveform may be grasped not by the area but also by a peak of a waveform from when the probe suctions the liquid to when the probe discharges the liquid, or an average value of the waveform in the fixed section. Instead of determining the state using a single index, a combination of a plurality of indexes may be used.

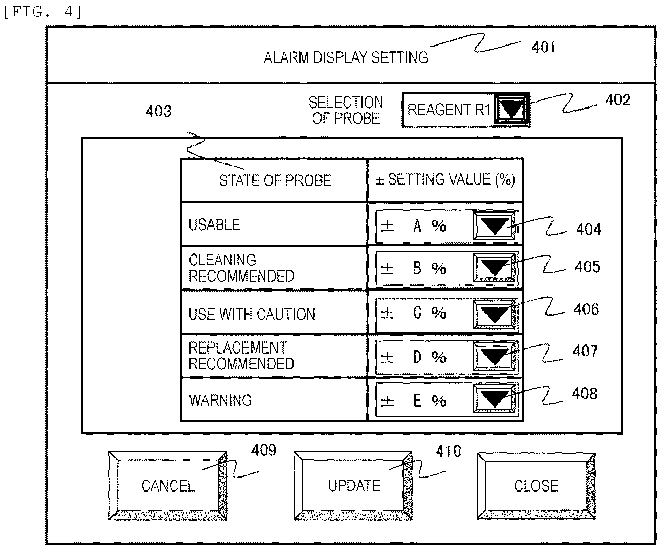

It is possible to improve the efficiency of examination by performing appropriate maintenance according to the degree of the state of a probe. Consequently, state determination criteria for a probe based on an index of a change in a waveform are set in the determination unit 107 in advance. Fig. 4 shows an alarm display setting screen 401 for displaying an alarm on the display unit of the automatic analysis device according to the state of a probe. State determination criteria can be set for each probe by a probe selection unit 402. In a probe state setting unit 403, the state of a probe is set stepwise based on a deviation from a normal probe area ratio AR (%) = 100. For example, values are set for usable (± A%) 404, cleaning recommended (± B%) 405, use with caution (± C%) 406, replacement recommended (± D%) 407, and warning (± E%) 408. For example, values are set as A < B < C < D < E, and a user is recommended to manage maintenance according to the degree of deviation from a normal value. The above-described settings can be canceled by a cancel button 409, or setting values can be updated using an update button 410.

The signal processing unit 103 outputs a determination result to the control device 21 of the automatic analysis device, and can display "usable", "cleaning recommended", "use with caution", "replacement recommended", or "warning", or can display an alarm in the case of "use with caution", "replacement recommended", or "warning". Alternatively, an LED lamp may be attached to a probe head cover of the dispensing mechanism 101, and the signal processing unit 103 may notify the user of the state of the probe by turning on or blinking the LED lamp according to the determination of the state of the probe.

In the present embodiment, the waveform of the capacitance signal Cs of the probe in use and the waveform area WA of the capacitance signal Cs, which are acquired by the determination unit 107 each time the state of the probe is determined, are temporarily stored in the storage unit 106. When a determination result of a deviation of an index obtained by the determination unit 107 is equal to or greater than "use with caution" (± C%), the control device 21 determines that an abnormality has occurred in the probe, displays an alarm, performs automatic reexamination, and performs remeasurement from the start of a liquid dispensing operation. An abnormality value of the capacitance signal Cs may occur not only due to an abnormality in the probe, but also due to sudden causes such as static electricity and air bubbles. Then, when the remeasurement is performed, the dispensing operation often returns to normal in the second measurement. An example thereof is a phenomenon referred to as probe carry-back. The carry-back phenomenon is a phenomenon in which a liquid cannot be spotted in the container because the liquid goes around the outside of the probe when discharging the liquid, and the probe is carried back with the liquid attached to the outside of the probe. Here, an abnormality occurs in the waveform of the capacitance signal Cs, but the dispensing operation usually returns to normal when remeasurement is performed.

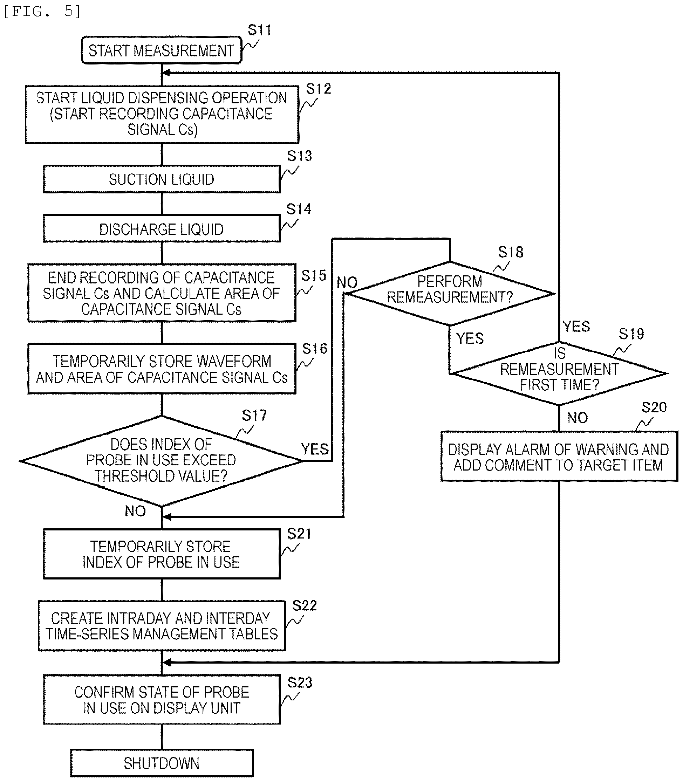

Fig. 5 shows a flowchart for determining the state of a probe in use. When measurement is started (S11), the control unit 104 of the signal processing unit 103 starts recording the capacitance signal Cs output from the liquid level sensor of the detection unit 102 (S12). A section in which the capacitance signal Cs of the probe in use is recorded is the same as the fixed section in which the reference capacitance signal SCs is acquired. The control unit 104 records a temporal waveform of the capacitance signal Cs in the fixed section from the suction of a liquid by the probe (S13) to the cleaning of the probe after the discharge of the liquid (S14), and the calculation unit 105 calculates the area of the temporal waveform of the capacitance signal Cs (S15). The control unit 104 temporarily stores the recorded temporal waveform of the capacitance signal Cs and the area thereof in the storage unit 106 as the temporal waveform of the capacitance signal Cs of the probe in use and the area thereof (S16).

The calculation unit 105 calculates a waveform change index, here an area ratio AR (%), using a waveform area WA1 of the reference capacitance signal SCs and a waveform area WA2 of the capacitance signal Cs of the probe in use, which are stored in the storage unit 106. The determination unit 107 determines whether the area ratio AR (%) exceeds a threshold value (S17). For example, a setting value for cleaning recommended (± B%, see Fig. 4) can be used as the threshold value. When the waveform change index does not exceed the threshold value (NO in S17), the control unit 104 temporarily stores the acquired value of the waveform change index of the probe in use in the storage unit 106 (S21).

On the other hand, when the waveform change index exceeds the threshold value (YES in S17), the control device 21 of the automatic analysis device determines whether to perform remeasurement (S18). For example, the control device 21 determines to perform remeasurement when the waveform change index exceeds a setting value for use with caution (± C%, see Fig. 4). When remeasurement is not performed, the control unit 104 temporarily stores the acquired value of the waveform change index of the probe in use in the storage unit 106 (S21).

When the waveform change index exceeds the threshold value of the remeasurement (YES in S18), the control device 21 remeasures the liquid with the probe in use. The remeasurement is determined based on whether the threshold value of the remeasurement is exceeded for the first time or twice in a row. The first remeasurement (YES in S19) starts from the recording of the capacitance signal Cs. When the threshold value of the remeasurement is exceeded twice in a row (NO in S19), the control device 21 does not perform remeasurement, but displays a warning alarm on the display unit of the device and adds a comment "Measurement is not performed due to abnormality of probe" to an examination item sampled by the probe in use (S20). The user can check the state of the probe in use by the display unit of the automatic analysis device (S23).

The calculation unit 105 creates intraday and interday time-series management tables for the probe in use from the values of the waveform change indexes of the probe in use which are temporarily stored in the storage unit 106 (S22). The time-series management table will be described later. The time-series management table can also be displayed on the display unit of the automatic analysis device, allowing the user to confirm the state of the probe in use (S23). The creation of the time-series management tables in steps S22 and S23 may be performed by the control device 21 by transmitting the values of the waveform change indexes from the signal processing unit 103 to the control device 21. The creation of the time-series management table requires low real-time performance, and thus a processing load on the signal processing unit 103 is reduced.

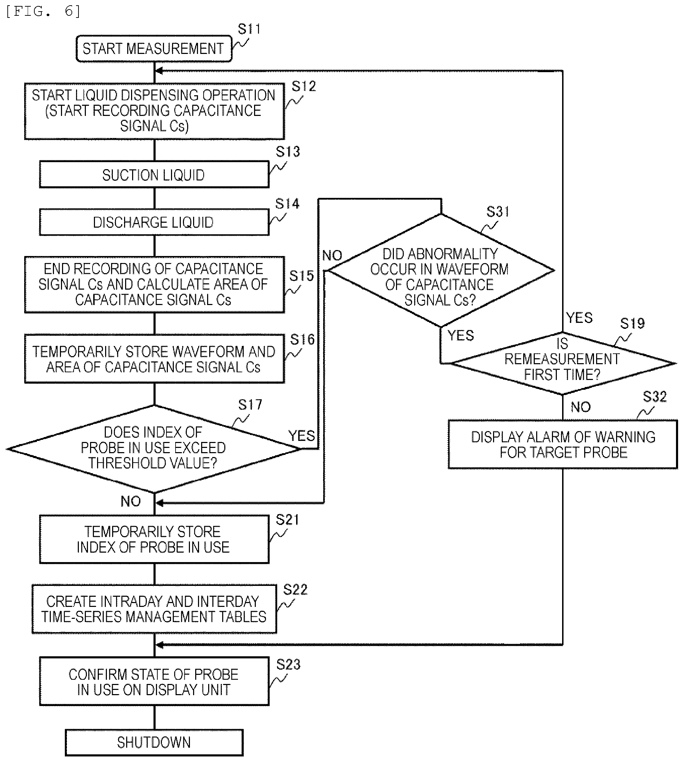

Fig. 6 shows a flowchart for determining the state of a probe in use from waveform abnormalities such as spikes shown in Fig. 2D. Steps of performing the same processes as those in the flowchart of Fig. 5 are given the same reference numerals, and repeated description will be omitted.

When the waveform change index exceeds the threshold value (YES in S17), the control device 21 of the automatic analysis device determines whether to perform remeasurement (S18). For example, the control device 21 determines to perform remeasurement when the waveform change index exceeds a setting value for use with caution ($\pm$ C%, see Fig. 4). When remeasurement is not performed, the control unit 104 temporarily stores the acquired value of the waveform change index of the probe in use in the storage unit 106 (S21).

When the waveform change index exceeds the threshold value of the remeasurement (YES in S18), the determination unit 107 determines whether an abnormal waveform such as a spike is observed in the waveform of the capacitance signal Cs (S31). When an abnormal waveform is observed (YES in S31), the control unit 21 remeasures the liquid with the probe in use. As in the flowchart of Fig. 5, the remeasurement is performed once, and when an abnormal waveform is detected twice in a row (NO in S19), the control unit 21 does not perform remeasurement and displays a warning alarm on the display unit of the device together with a comment such as "Spike occurred in OO probe" (S32). The user confirms the state of the probe in use by the display unit of the automatic analysis device (S23) and performs maintenance or replacement of the probe.

Fig. 7 shows an example of a display screen for an intraday time-series management chart displayed on the display unit of the automatic analysis device. The intraday time-series management chart is created using the waveform change index of the probe in use which is stored in the storage unit 106 in step S21 of the flowchart of Fig. 5 or Fig. **6.** The intraday time-series management chart may be updated each time step S21 is executed.

A display screen 701 includes a probe selection portion 702, a last replacement date display portion 703, and an intraday time-series management chart display portion 704. The last replacement date and the intraday time-series management chart for the probe selected in the probe selection portion 702 are displayed on the display portions 703 and 704, respectively.

In the intraday time-series management chart, the horizontal axis represents operation hours from power-on to power-off of the dispensing device, the vertical axis represents a waveform change index (here, an area ratio AR(%)), and the value of a waveform change index for corresponding operation hours on the day is plotted each time step S21 is executed. In the case of an automatic analysis device that operates 24 hours a day, a new intraday time-series management may be created when 24 hours pass.

In the intraday time-series management chart, numerical values (%) set on the alarm display setting screen 401 are described. In the time-series management (intraday) of the probe, an alarm setting 705 which is set on the alarm display setting screen 401 (see Fig. 4) is displayed. In general, when the probe in use deteriorates, the amplitude of the waveform of the capacitance signal Cs decreases as compared to a new probe, and the area ratio AR (%) decreases. On the other hand, when an abnormality such as dirt or scratches occurs, the area ratio AR (%) may increase due to the noise waveform of the capacitance signal Cs as shown in Fig. 2C. Therefore, the area ratio AR (%) deviates from an ideal value of 100% due to the abnormality in the probe in use.

As such, the number of dispensing items for a selected probe for one day is plotted on the intraday time-series management chart, making it possible to manage the state of the probe in use. When a plurality of plots on the intraday time-series management chart are disordered at the end of the examination, the disorder suggests that any abnormality occurred in the probe in use. When a marker plotted on the intraday time-series management chart is selected, the temporal waveform of the capacitance signal Cs and the area thereof which are stored in the storage unit 106 of the signal processing unit 103 may be displayed. From the information, the user can estimate and predict abnormalities such as carry-back of a liquid, occurrence of air suction, and spikes.

Fig. 8 shows an example of a display screen for an interday time-series management chart displayed on the display unit of the automatic analysis device. The interday time-series management chart is created using the waveform change index of the probe in use which is stored in the storage unit 106 in step S21 of the flowchart in Fig. 5 or Fig. 6. An average value of waveform change indexes for one day is plotted on the interday time-series management chart.

A display screen 801 includes a probe selection portion 802, a last replacement date display portion 803, and an interday time-series management chart display portion 804. A last replacement date and an interday time-series management chart for a probe selected by the probe selection portion 802 are displayed on the display portions 803 and 804, respectively. A number-of-days elapsed since replacement 806 and a number-of-days elapsed since last cleaning 807 for the selected probe are displayed as information.

In the intraday time-series management chart shown in Fig. 8, the number of days elapsed since probe replacement is displayed on the horizontal axis, the vertical axis represents a waveform change index (here, an area ratio AR (%)), and an average value of values of waveform change indexes for one day is plotted. A numerical value 805 which is set as cleaning recommendation on the alarm display setting screen 401 is displayed.

From the information, the user can detect the adhesion of dirt, scratches, aged deterioration, and the like of the probe in use, and can examine the timing of maintenance.

Here, an example in which a waveform change index is made into a graph and displayed on a screen is shown, but a model in which the value of a waveform change index is used as an explanatory variable may be created to predict recommended replacement time for a probe in use.

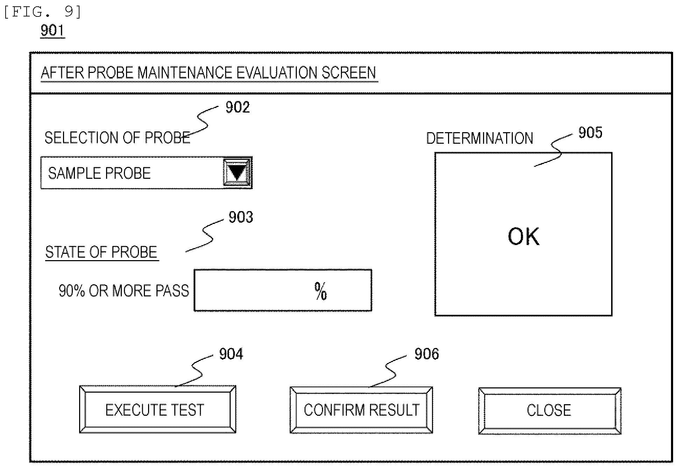

The user can objectively evaluate the state of the probe after maintenance by using the waveform change index. Fig. 9 shows an example of a probe state evaluation screen 901.

When a probe subjected to maintenance is selected by a probe selection portion 902 and a test execution button 904 is pressed, the automatic analysis device tests the dispensing mechanism 101 using a dummy sample or system water, and a waveform change index (here, an area ratio AR (%)) calculated by the signal processing unit 103 and a determination result are displayed in an evaluation value display portion 903 and a determination display portion 905, respectively. Here, an example in which 90% or more is determined to be a pass is shown. Here, when a result confirmation button 906 is pressed, the temporal waveform of the capacitance signal Cs and the area thereof stored in the storage unit 106 of the signal processing unit 103 can be displayed.

## Reference Signs List

1: reaction disk
2: reaction container
3: cleaning mechanism
4: spectrophotometer
5, 6: stirring mechanism
7, 8: reagent dispensing mechanism
7a, 8a: reagent probe
9: reagent disk
10: reagent bottle
11, 12: sample dispensing mechanism
11a, 12a: sample probe
13, 14, 30, 31, 32, 33: cleaning tank
15: sample container
16: sample rack
17: sample transport mechanism
18: reagent pump
19: sample pump
20: cleaning pump
21: control device
22: input/output device
23, 24: ultrasonic cleaner
100: automatic analysis device
101: dispensing mechanism
101p: probe
101v: container

101s: liquid
102: detection unit
103: signal processing unit
104: control unit
105: calculation unit
106: storage unit
107: determination unit
201, 211, 231: suction section
202, 232: discharge section
203: movement section
204: cleaning section
233, 234: noise waveform
241: spike
401: alarm display setting screen
402: probe selection portion
403: probe state setting portion
404: usable
405: cleaning recommended
406: use with caution
407: replacement recommended
408: warning
409: cancel button
410: update button
701: display screen
702: probe selection portion
703: last replacement date display portion
704: intraday time-series management chart display portion
705: alarm setting
801: display screen
802: probe selection portion
803: last replacement date display portion
804: intraday time-series management chart display portion
805: cleaning recommended setting numerical value
806: number-of-days elapsed since replacement
807: number-of-days elapsed since last cleaning
901: probe state evaluation screen
902: probe selection portion
903: evaluation value display portion
904: test execution button
905: determination display portion
906: result confirmation button

## Claims

1. A dispensing device comprising:

   a dispensing mechanism that includes a probe for dispensing a liquid;
   a detection unit that includes a liquid level sensor measuring a capacitance between a distal end of the probe and a reference potential surface and outputting a capacitance signal; and
   a signal processing unit that determines a state of the probe based on a change in a temporal waveform of the capacitance signal.

2. The dispensing device according to claim 1, wherein

the signal processing unit stores, as a reference capacitance signal waveform, the temporal waveform of the capacitance signal during a dispensing operation of the dispensing mechanism immediately after the probe is replaced, and the signal processing unit determines the state of the probe based on a waveform change index indicating a change in the temporal waveform of the capacitance signal during the dispensing operation of the dispensing mechanism from the reference capacitance signal waveform.

3. The dispensing device according to claim 2, wherein

the signal processing unit stores, as a reference area, an area of the reference capacitance signal waveform in a predetermined section during the dispensing operation of the dispensing mechanism immediately after the probe is replaced, and an area ratio of the area of the temporal waveform of the capacitance signal during the dispensing operation of the dispensing mechanism in the predetermined section to the reference area is set as a waveform change index.

4. The dispensing device according to claim 3, wherein the predetermined section is a section from start of suction of the liquid by the probe to end of cleaning of the probe.

5. The dispensing device according to claim 2, wherein the signal processing unit detects a spike included in the temporal waveform of the capacitance signal during the dispensing operation of the dispensing mechanism.

6. The dispensing device according to claim 1, wherein

the dispensing mechanism includes an LED lamp, and the signal processing unit turns on the LED lamp according to the state of the probe determined.

7. An automatic analysis device using the dispensing device according to claim 2 for dispensing a sample or a reagent, wherein a user is recommended to manage maintenance according to a value of the waveform change index.

8. The automatic analysis device according to claim 7, further comprising

a display device, wherein a setting screen for setting a range of the value of the waveform change index that recommends the user to manage the maintenance is displayed on the display device.

9. The automatic analysis device according to claim 7, wherein remeasurement is performed for the measurement in which the liquid is dispensed by the dispensing operation when the value of the waveform change index exceeds a predetermined threshold value.

10. The automatic analysis device according to claim 9, wherein an alarm is output to the user without performing remeasurement again when the value of the waveform change index due to the dispensing operation of the dispensing mechanism in the remeasurement exceeds the predetermined threshold value.

11. The automatic analysis device according to claim 7, wherein remeasurement is performed for the measurement in which the liquid is dispensed by the dispensing operation when the value of the waveform change index exceeds a predetermined threshold value, and the temporal waveform of the capacitance signal during the dispensing operation of the dispensing mechanism includes a spike.

12. The automatic analysis device according to claim 11, wherein an alarm is output to the user without performing remeasurement again when the value of the waveform change index due to the dispensing operation of the dispensing mechanism in the remeasurement exceeds the predetermined threshold value, and the temporal waveform of the capacitance signal during the dispensing operation of the dispensing mechanism in the remeasurement includes a spike.

13. The automatic analysis device according to claim 7, further comprising

a display device, wherein an intraday time-series management chart is displayed on the display device, and the intraday time-series management chart has a horizontal axis representing operation hours of the dispensing device on a day and a vertical axis representing the value of the waveform change index, and the value of the waveform change index for the operation hours of the dispensing device is plotted.

14. The automatic analysis device according to claim 7, further comprising

a display device, wherein an interday time-series management chart is displayed on the display device, and
the interday time-series management chart has a horizontal axis representing a number-of-days elapsed since probe replacement of the dispensing device and a vertical axis representing the value of the waveform change index, and an average value of the values of the waveform change indexes for one day in the number-of-days elapsed of the dispensing device is plotted.

15. The automatic analysis device according to claim 7, further comprising

a display device, wherein
the signal processing unit determines the state of the probe based on the waveform change index through the dispensing operation of the dispensing mechanism after the maintenance of the probe, and
the display device displays a determination result obtained by the signal processing unit.

[FIG. 1A]

SIGNAL PROCESSING UNIT 103

101

101p
101v

102
DETECTION UNIT

104
CONTROL UNIT

105
CALCULATION UNIT

106
STORAGE UNIT

107
DETERMINATION UNIT

21

22

[FIG. 1B]

101

101p

C1

Cs

101v

C2

101s

[FIG. 2A]

[FIG. 2B]

[FIG. 2C]

[FIG. 2D]

[FIG. 3]

```
┌────────────────────────────────────────────────────────┐
│                     REPLACE PROBE                        │─── S01
└────────────────────────────────────────────────────────┘
                            │
┌────────────────────────────────────────────────────────┐
│            START LIQUID DISPENSING OPERATION             │─── S02
│   (START RECORDING REFERENCE CAPACITANCE SIGNAL SCs)     │
└────────────────────────────────────────────────────────┘
                            │
┌────────────────────────────────────────────────────────┐
│                    SUCTION LIQUID                        │─── S03
└────────────────────────────────────────────────────────┘
                            │
┌────────────────────────────────────────────────────────┐
│                   DISCHARGE LIQUID                       │─── S04
└────────────────────────────────────────────────────────┘
                            │
┌────────────────────────────────────────────────────────┐
│   END RECORDING OF REFERENCE CAPACITANCE SIGNAL SCs      │─── S05
│  AND CALCULATE AREA OF REFERENCE CAPACITANCE SIGNAL SCs  │
└────────────────────────────────────────────────────────┘
                            │
┌────────────────────────────────────────────────────────┐
│   STORE WAVEFORM AND AREA OF REFERENCE CAPACITANCE       │─── S06
│   SIGNAL SCs IN STORAGE UNIT UNTIL SUBSEQUENT PROBE       │
│                    REPLACEMENT                            │
└────────────────────────────────────────────────────────┘
```

14

[FIG. 4]

ALARM DISPLAY SETTING — 401

403    SELECTION
       OF PROBE    REAGENT R1 ▼ — 402

| STATE OF PROBE | ± SETTING VALUE (%) | |
|---|---|---|
| USABLE | ± A % | ▼ — 404 |
| CLEANING RECOMMENDED | ± B % | ▼ — 405 |
| USE WITH CAUTION | ± C % | ▼ — 406 |
| REPLACEMENT RECOMMENDED | ± D % | ▼ — 407 |
| WARNING | ± E % | ▼ — 408 |

CANCEL — 409    UPDATE — 410    CLOSE

[FIG. 5]

[FIG. 6]

START MEASUREMENT S11

START LIQUID DISPENSING OPERATION
(START RECORDING CAPACITANCE
SIGNAL Cs) S12

SUCTION LIQUID S13

DISCHARGE LIQUID S14

END RECORDING OF CAPACITANCE
SIGNAL Cs AND CALCULATE AREA OF
CAPACITANCE SIGNAL Cs S15

TEMPORARILY STORE WAVEFORM AND
AREA OF CAPACITANCE SIGNAL Cs S16

DOES INDEX OF
PROBE IN USE EXCEED
THRESHOLD VALUE? S17

YES

NO

TEMPORARILY STORE
INDEX OF PROBE IN USE S21

CREATE INTRADAY AND INTERDAY
TIME-SERIES MANAGEMENT TABLES S22

CONFIRM STATE OF PROBE
IN USE ON DISPLAY UNIT S23

SHUTDOWN

DID ABNORMALITY
OCCUR IN WAVEFORM
OF CAPACITANCE
SIGNAL Cs? S31

NO

YES

IS
REMEASUREMENT
FIRST TIME? S19

YES

NO

DISPLAY ALARM OF WARNING
FOR TARGET PROBE S32

[FIG. 7]

701

[FIG. 8]

801

[FIG. 9]

901

AFTER PROBE MAINTENANCE EVALUATION SCREEN

SELECTION OF PROBE — 902

| SAMPLE PROBE | ▼ |

STATE OF PROBE — 903

90% OR MORE PASS | % |

DETERMINATION — 905

OK

EXECUTE TEST — 904

CONFIRM RESULT — 906

CLOSE

[FIG. 10]

<div align="center">

## INTERNATIONAL SEARCH REPORT

</div>

| International application No. |
| --- |
| **PCT/JP2023/004090** |

**A. CLASSIFICATION OF SUBJECT MATTER**

*G01N 35/00*(2006.01)i; *G01N 35/10*(2006.01)i
FI:     G01N35/00 F; G01N35/10 C

According to International Patent Classification (IPC) or to both national classification and IPC

**B. FIELDS SEARCHED**

Minimum documentation searched (classification system followed by classification symbols)

G01N35/00; G01N35/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2011-27480 A (BECKMAN COULTER INC) 10 February 2011 (2011-02-10) paragraphs [0019], [0022]-[0029], [0053]-[0054], fig. 4 | 1-2, 6-8, 15 |
| Y | | 5, 9-14 |
| A | | 3-4 |
| Y | JP 2011-13005 A (BECKMAN COULTER INC) 20 January 2011 (2011-01-20) paragraphs [0049]-[0055], fig. 5-8 | 5 |
| Y | JP 2011-153944 A (HITACHI HIGH-TECHNOLOGIES CORP) 11 August 2011 (2011-08-11) paragraphs [0033]-[0038], fig. 5-6 | 9-12 |
| Y | WO 2019/188599 A1 (HITACHI HIGH-TECHNOLOGIES CORP) 03 October 2019 (2019-10-03) paragraphs [0066]-[0090], fig. 6 | 9-12 |
| Y | JP 2010-217039 A (BECKMAN COULTER INC) 30 September 2010 (2010-09-30) paragraphs [0051]-[0053] | 13-14 |

☑ Further documents are listed in the continuation of Box C.     ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **07 April 2023** | **25 April 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2023/004090**

### C.   DOCUMENTS CONSIDERED TO BE RELEVANT

| Category* | Citation of document, with indication, where appropriate, of the relevant passages | Relevant to claim No. |
|---|---|---|
| Y | JP 2012-42225 A (SYSMEX CORP) 01 March 2012 (2012-03-01)<br>paragraph [0075] | 13-14 |
| A | JP 2013-84106 A (SOGO KEIBI HOSHO CO LTD) 09 May 2013 (2013-05-09)<br>entire text | 3-4 |

Form PCT/ISA/210 (second sheet) (January 2015)

**INTERNATIONAL SEARCH REPORT**
Information on patent family members

International application No.

**PCT/JP2023/004090**

| Patent document cited in search report | | | Publication date (day/month/year) | Patent family member(s) | Publication date (day/month/year) |
|---|---|---|---|---|---|
| JP | 2011-27480 | A | 10 February 2011 | (Family: none) | |
| JP | 2011-13005 | A | 20 January 2011 | (Family: none) | |
| JP | 2011-153944 | A | 11 August 2011 | (Family: none) | |
| WO | 2019/188599 | A1 | 03 October 2019 | US 2020/0264206 A1 paragraphs [0081]-[0105], fig. 6 | |
| JP | 2010-217039 | A | 30 September 2010 | (Family: none) | |
| JP | 2012-42225 | A | 01 March 2012 | US 2012/0041776 A1 paragraph [0088] | |
| JP | 2013-84106 | A | 09 May 2013 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013044623 A